# FASCICULE DE BREVET EUROPEEN

(11) **EP 2 666 704 B1**
(45) Date de publication et mention de la délivrance du brevet: **08.10.2014**
(21) Numéro de dépôt: 13168683.4
(22) Date de dépôt: 22.05.2013
(51) Int. Cl.: B62D 39/00

(54) **Dispositif de mise en sécurité d'un objet sur un mobile en cas de choc**
Vorrichtung zum gefahrlosen Tragen eines Gegenstandes im Falle vom Aufprall.
Device to safely support an object on a moving body in case of impact.

(30) Priorité: 23.05.2012 FR 1254682
(43) Date de publication de la demande: 27.11.2013
(73) Titulaire: Segard, Jean-Baptiste, 78100 Saint Germain en Laye (FR)
(72) Inventeur: Segard, Jean-Baptiste, 78100 Saint Germain en Laye (FR)
(74) Mandataire: Poncet, Jean-François

(56) Documents cités:
- EP-A1- 2 439 128
- DE-A1- 19 908 096
- DE-U1- 20 316 772
- US-A- 2 929 637
- US-A- 3 508 783
- US-A- 3 589 466
- US-A1- 2003 025 342
- US-B1- 7 721 837

## Description

La présente invention concerne des moyens permettant de réduire les conséquences néfastes pouvant résulter d'une collision d'un mobile avec un corps étranger.

L'invention vise en particulier à réduire les contraintes que subissent lors d'une collision certains objets contenus dans le mobile, tels qu'un réservoir de fluide dangereux.

L'invention vise également à réduire, dans l'hypothèse d'une collision, l'effet de bélier produit par un objet peu compressible contenu dans le mobile.

Les techniques de mise en sécurité d'un mobile et de son contenu en cas de collision ont été développées essentiellement pour protéger l'habitacle d'un mobile, afin d'éviter ou de réduire les accélérations et compressions subies par les passagers lors d'une collision.

Ces techniques consistent à prévoir un habitacle relativement rigide, entouré d'une structure compressible apte à absorber elle-même l'énergie dégagée par la collision.

La protection des autres objets présents dans un mobile est généralement assurée par un choix approprié de leur position, ce choix visant à éviter de les soumettre à l'écrasement provoqué par la collision.

Mais il n'est pas toujours possible de placer ces objets à l'écart de la zone comprimée par la collision, car cela conduit à une augmentation de l'encombrement du mobile.

Ainsi, le problème proposé par la présente invention est de réduire les effets d'une collision d'un mobile sur ou par les objets qu'il contient, sans augmenter sensiblement l'encombrement du mobile.

Pour cela, au lieu de prévoir une structure périphérique apte à absorber l'énergie dégagée par la collision, l'invention vise à prévoir d'autres moyens pour éviter de transmettre à l'objet l'effort d'écrasement dû à la collision.

On connaît du document US 2,929,637 un dispositif qui déplace un compartiment passagers à l'écart de l'axe de collision par une transmission hydraulique sollicitée par l'écrasement du châssis d'une voiture lors d'une collision frontale.

On connaît aussi du document US 3,589,466 un dispositif qui fait pivoter vers le haut autour d'un axe de pivotement un compartiment passagers sous l'action de l'inertie lors d'une décélération brusque.

Ces dispositifs mettent en oeuvre des moyens mécaniques complexes et encombrants, augmentant sensiblement le poids d'un véhicule, et dont l'efficacité est douteuse.

Pour éviter ces inconvénients ainsi que d'autres, et selon un premier aspect, l'invention propose un dispositif de tenue d'objet pour tenir au moins un objet sur un mobile susceptible d'être soumis à un effort d'écrasement selon au moins un axe de collision, et dans lequel en fonction de l'écrasement, le dispositif de tenue d'objet déplace l'objet à l'écart de l'axe de collision ; selon l'invention :
- le dispositif comprend au moins un longeron, orienté selon une direction sensiblement parallèle à l'axe de collision, et apte à flamber sous l'effet de l'effort d'écrasement,
- l'objet est fixé à un tronçon du longeron, ledit tronçon s'écartant de l'axe de collision lors du flambage du longeron.

Lorsqu'un tel dispositif est soumis à un effort d'écrasement selon l'axe de collision, le longeron se déforme par flambage, c'est-à-dire que son tronçon portant l'objet s'écarte de l'axe de collision.

L'objet est ainsi écarté lui aussi de l'axe de collision, évitant sa sollicitation par les efforts d'écrasement dus à la collision.

En général, un mobile destiné à se déplacer dans une direction de progression privilégiée présente une forme relativement allongée, des côtés latéraux relativement verticaux, et des faces frontale et postérieure de hauteurs réduites, qui sont d'une part à l'écart de la surface telle que le sol sur laquelle se déplace le mobile et qui d'autre part se rejoignent à une face supérieure par des faces obliques antérieure et postérieure respectives.

Il en résulte que, lors d'une collision par l'avant ou par l'arrière, l'effort d'écrasement est appliqué au mobile par la face frontale et / ou par la face postérieure, de hauteurs réduites. Ainsi, la portion du mobile qui subit l'effort de compression maximal se situe dans la tranche inférieure du mobile entre la face frontale et la face postérieure. Or c'est dans cette tranche que se trouvent généralement les principaux organes fonctionnels du mobile.

L'invention permet, en utilisant de façon simple et efficace au moins un longeron du dispositif de tenue d'objet, par exemple un longeron du châssis de véhicule, de déplacer en cas de collision l'un au moins de ces organes fonctionnels, appelés objets selon l'invention, afin de le placer à l'écart de l'axe de collision, c'est-à-dire à l'écart de la zone située entre la face frontale et la face postérieure du mobile.

Dès lors que l'objet est déplacé à l'écart de l'axe de collision, il se trouve moins sollicité pour supporter l'effort d'écrasement appliqué par la collision à la face frontale et / ou à la face postérieure du mobile.

L'invention s'applique naturellement à un dispositif de tenue d'objet apte à tenir un seul objet sur un mobile pour le déplacer à l'écart de l'axe de collision.

Mais l'invention s'applique également à un dispositif de tenue d'objet adapté pour tenir plusieurs objets sur le mobile et à les déplacer à l'écart de l'axe de collision selon des directions respectives distinctes.

En particulier, on peut concevoir un tel dispositif de tenue d'objet adapté pour tenir plusieurs objets sur le mobile et pour déplacer lesdits objets à l'écart de l'axe de collision selon deux directions respectives opposées, par exemple vers le bas et vers le haut.

Selon une première possibilité, le dispositif de tenue d'objet peut être adapté pour déplacer le ou les objets selon une translation.

En alternative ou en complément, le dispositif de tenue d'objet peut être adapté pour déplacer le ou les objets selon une rotation, par exemple en faisant pivoter l'objet sur lui-même.

Selon un autre aspect, l'invention prévoit un mobile susceptible d'être soumis à un effort d'écrasement selon au moins un axe de collision, et comprenant un dispositif de tenue d'objet tel que défini ci-dessus.

Selon une première possibilité, le dispositif de tenue d'objet peut être rapporté sur le châssis du mobile.

Selon une seconde possibilité, le dispositif de tenue d'objet peut être une partie constitutive du châssis du mobile.

De préférence, le dispositif de tenue d'objet peut déplacer l'objet vers le haut ou vers le bas du mobile.

L'objet peut par exemple être un réservoir de fluide dangereux, tel qu'un réservoir de carburant pour moteur à combustion interne.

En alternative, l'objet peut être un objet peu compressible, que l'on écarte de l'axe de collision pour éviter qu'il ne constitue une sorte de bélier offrant une résistance trop élevée à l'écrasement provoqué par la collision.

Selon un mode de réalisation avantageux, on peut prévoir que :
- le dispositif de tenue d'objet porte un réservoir de carburant et le déplace selon une translation vers le bas en cas de compression selon l'axe de collision, et / ou
- le dispositif de tenue d'objet porte un moteur thermique couplé à une génératrice d'électricité et les déplace vers le haut en cas de compression selon l'axe de collision.

Selon une première application, le mobile peut constituer un véhicule automobile.

Selon une seconde application, le mobile peut constituer une remorque pour véhicule automobile.

D'autres objets, caractéristiques et avantages de la présente invention ressortiront de la description suivante de modes de réalisation particuliers, faite en relation avec les figures jointes, parmi lesquelles :
- la figure 1 est une vue en perspective d'un mobile de type véhicule automobile ;
- la figure 2 est une vue de côté du mobile de la figure 1 ;
- la figure 3 est une vue de côté illustrant partiellement deux mobiles avant une collision, l'un des mobiles ayant un dispositif de tenue d'objet selon l'invention pour tenir un objet ;
- la figure 4 est une vue de côté illustrant les mobiles de la figure 3 après la collision ;
- la figure 5 est une vue de côté illustrant un mobile de type remorque pour véhicule automobile, le mobile ayant un dispositif de tenue d'objet selon l'invention pour tenir deux objets ;
- la figure 6 est une vue de côté illustrant le mobile de la figure 5 après une collision ;
- la figure 7 est une vue de côté illustrant un mobile à dispositif de tenue d'objet selon un autre mode de réalisation de l'invention pour la tenue de deux objets ; et
- la figure 8 illustre en vue de côté le mobile de la figure 7 après une collision.

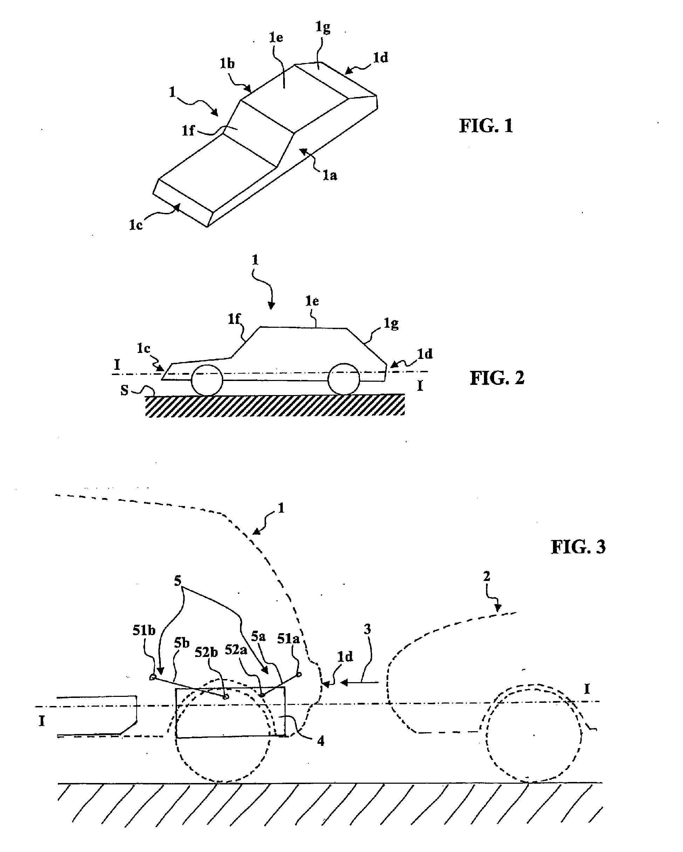

On considère tout d'abord les figures 1 et 2 qui illustrent une structure de mobile 1 de type véhicule automobile. Un tel mobile 1 comporte une forme relativement allongée, limitée par deux côtés latéraux 1a et 1b, une face frontale 1c, une face postérieure 1d, une face supérieure 1e, une face oblique antérieure 1f, et une face oblique postérieure 1g. La face frontale 1c et la face postérieure 1d sont généralement de hauteurs réduites, et elles sont toutes deux à l'écart de la surface telle que le sol S sur laquelle se déplace le mobile 1. Les faces frontale 1c et postérieure 1d se rejoignent d'autre part à la face supérieure 1e par les faces obliques antérieure 1f et postérieure 1g respectives.

Lorsqu'un tel mobile 1 entre en collision par l'avant ou l'arrière, l'effort d'écrasement dû à la collision se produit essentiellement contre la face frontale 1c ou contre la face postérieure 1d, et se propage dans le mobile 1 selon la partie inférieure du mobile 1 située entre la face frontale 1c et la face postérieure 1d. Dans le cas d'une collision longitudinale, on définit ainsi un axe de collision longitudinal I-I passant à mi-hauteur de la partie inférieure du mobile 1 située entre la face frontale 1c et la face postérieure 1d.

La partie supérieure du mobile 1, située entre la face supérieure 1e et la partie inférieure du mobile 1, est relativement protégée des efforts de compression dus à la collision. L'espace situé entre le sol S et le mobile 1 reste à l'écart des efforts de compression dus à la collision.

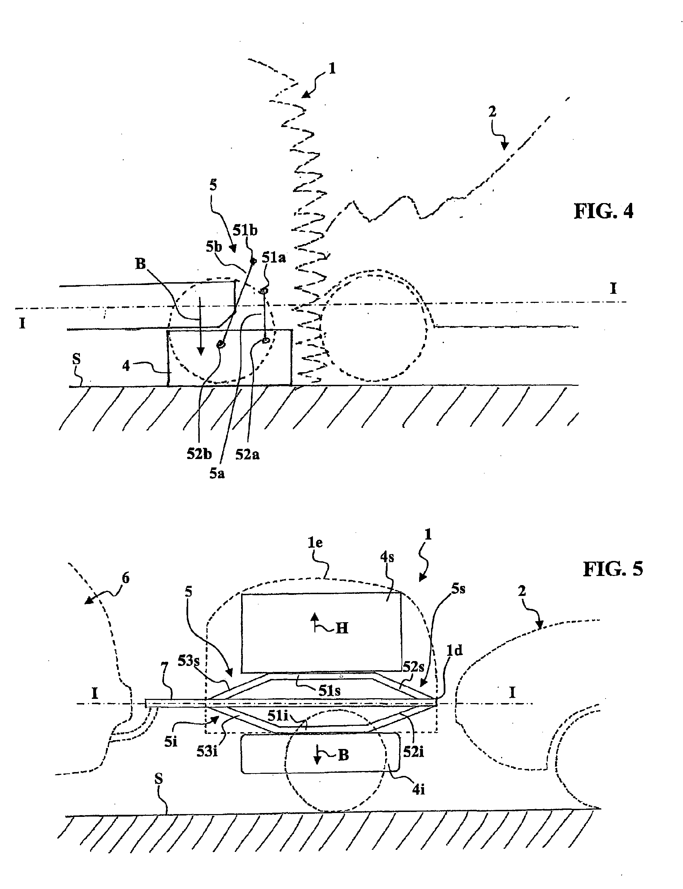

Les figures 3 et 4 illustrent, en vue de côté, une collision sur l'arrière d'un mobile 1 par un mobile 2 selon un mouvement relatif illustré par la flèche 3.

Le mobile 1 comprend, dans sa partie postérieure, au voisinage de sa face postérieure 1d, un objet 4 que l'on veut protéger de l'écrasement dû à la collision.

Cet objet 4, illustré schématiquement sous forme d'un parallélépipède rectangle, est supporté dans le mobile 1 par un dispositif de tenue d'objet 5 selon la présente invention.

Dans le mode de réalisation illustré sur les figures 3 et 4, le dispositif de tenue d'objet 5 est schématiquement illustré par deux bielles 5a et 5b. En pratique, les bielles 5a et 5b peuvent être des tiges métalliques orientées ou préformées pour constituer un profil longitudinal non linéaire favorisant leur flambage dans une direction privilégiée, et dont l'effet sera similaire à celui des bielles.

Pour comprendre le fonctionnement du dispositif de tenue d'objet 5, on considère donc que les tiges sont assimilées à des bielles 5a et 5b pouvant pivoter selon leurs extrémités. Ainsi, la bielle 5a est solidarisée au châssis du mobile 1 selon sa première extrémité 51a, et elle est solidarisée à l'objet 4 selon sa seconde extrémité 52a. De même, la bielle 5b est solidarisée au châssis du mobile 1 selon sa première extrémité 51b, et elle est solidarisée à l'objet 4 selon sa seconde extrémité 52b.

Les bielles 5a et 5b sont orientées de manière que leurs premières extrémités 51a et 51b solidarisées au châssis du mobile 1 soient situées à une hauteur supérieure à celle de leurs deux secondes extrémités 52a et 52b solidarisées à l'objet 4.

Lors d'un écrasement longitudinal dû à la collision, les premières extrémités 51a et 51b suivent la déformation du châssis du mobile 1, et vont donc se rapprocher l'une de l'autre selon l'axe de collision (I-I), avec un éventuel déplacement relatif vertical. Par contre la distance relative entre les secondes extrémités 52a et 52b ne change pas, l'objet 4 n'étant pas soumis aux efforts de compression supportés par le châssis du mobile 1.

Ainsi, comme illustré sur la figure 4, après une collision, on retrouve les premières extrémités 51a et 51b qui se sont rapprochées l'une de l'autre, ce qui provoque l'abaissement des secondes extrémités 52a et 52b.

Par ce mouvement, le dispositif de tenue d'objet 5 provoque l'abaissement de l'objet 4, qui se rapproche du sol S selon une translation B, et qui peut même venir en appui sur le sol S. Dans cette position, on voit que l'objet 4 se trouve en dessous de la zone de compression du mobile 1, et se trouve ainsi protégé des efforts de compression.

Ainsi, le dispositif de tenue d'objet 5 selon l'invention a déplacé l'objet 4 à l'écart de l'axe de collision I-I selon la translation B.

Dans le cas illustré sur les figures 3 et 4, l'objet 4 peut par exemple être un réservoir de carburant, dont il faut éviter l'écrasement.

En alternative, l'objet 4 peut être un élément difficilement compressible, dont la présence dans le mobile 1 pourrait constituer un danger soit pour une batterie logée sous le plancher du mobile 1, soit pour des passagers à l'intérieur du mobile 1, soit pour le mobile 2. L'escamotage de l'objet 4 par le dispositif de tenue d'objet 5 permet alors d'éviter ou de réduire l'effet de bélier réalisé par la poussée d'un objet 4 peu compressible.

En pratique, le dispositif de tenue d'objet 5 illustré sur les figures 3 et 4 peut être constitué de longerons 5i et 5s structurés et / ou orientés de façon à pouvoir flamber sous l'action d'un écrasement longitudinal dû à la collision, et l'objet 4 peut être fixé à un tronçon intermédiaire de l'un des longerons 5i et 5s. On pourra par exemple utiliser une structure déformable telle qu'illustrée sur les modes de réalisation suivants.

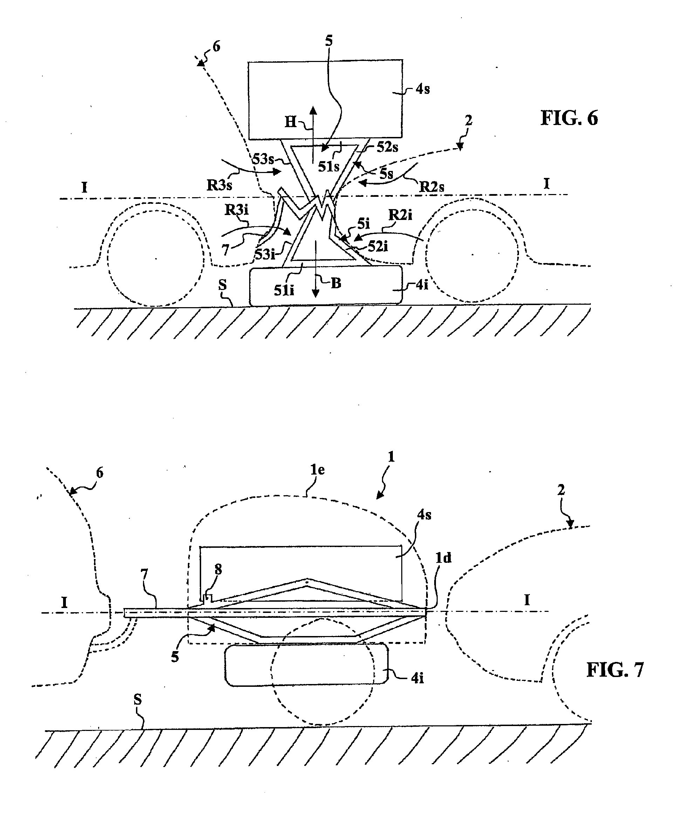

On considère maintenant les figures 5 et 6 qui illustrent en vue de côté un mobile 1 de type remorque pour véhicule automobile. Ainsi, le mobile 1 est attelé à un véhicule tracteur 6 qui le précède, et l'on suppose qu'une collision se produit avec un mobile 2 qui le suit.

Dans ce cas, le mobile 1 comprend un timon 7 constituant son extrémité frontale, équivalente à la face frontale 1c représentée sur la figure 1. De façon similaire, le mobile 1 comporte une face postérieure 1d. Le timon 7 et la face postérieure 1d sont à l'écart du sol S et à l'écart d'une face supérieure 1e du mobile 1. Dans le cas d'une collision longitudinale, l'axe de collision I-I se trouve sensiblement au niveau du timon 7 et de la face postérieure 1d, comme dans le mode de réalisation précédent.

Le mobile 1, dans ce mode de réalisation des figures 5 et 6, porte deux objets à protéger, à savoir un objet inférieur 4i et un objet supérieur 4s.

L'objet inférieur 4i peut par exemple être un réservoir de carburant.

L'objet supérieur 4s peut par exemple être un moteur thermique alimenté par le carburant contenu dans l'objet inférieur 4i, et accouplé à une génératrice d'électricité susceptible d'alimenter un moteur électrique du véhicule tracteur 6.

Pour tenir les objets 4i et 4s, la partie médiane du mobile 1 comprend un dispositif de tenue d'objet 5, situé dans la zone de l'axe de collision I-I, et donc soumis à l'effort de compression dû à la collision.

Sous l'effet de cette compression, le dispositif de tenue d'objet 5 est adapté pour déplacer simultanément l'objet inférieur 4i vers le bas et l'objet supérieur 4s vers le haut, à l'écart de la zone de compression autour de l'axe de collision I-I, selon des translations respectives B et H.

On fait en sorte que le timon 7 présente une résistance qui n'est pas excessive, de telle sorte qu'il ne puisse pas poinçonner les organes fonctionnels du véhicule tracteur 6. On pourra prévoir que, sous l'action d'une contrainte longitudinale, le timon 7 flambe latéralement ou vers le haut.

En pratique, comme illustré sur les figures 5 et 6, le dispositif de tenue d'objet 5 peut être constitué d'une structure en treillis métallique déformable à longerons 5i et 5s, avec une partie inférieure cintrée vers le bas et une partie supérieure cintrée vers le haut, les objets 4i et 4s étant fixés dans la zone médiane à mi-longueur du dispositif de tenue d'objet 5.

Comme on le voit sur la figure 6, lors de la collision, le dispositif de tenue d'objet 5 a été écrasé longitudinalement et les objets 4i et 4s ont été déplacés selon les translations verticales respectives B et H opposées, à l'écart de l'axe de collision I-I.

En pratique, l'objet inférieur 4i se trouve à une hauteur inférieure à celle des pare-chocs des deux mobiles 6 et 2, et ne risque donc pas d'être éventré par la compression liée au choc.

De même, l'objet supérieur 4s est dans une position surélevée, position dans laquelle il se trouve en regard des faces obliques plus écartées des deux mobiles 6 et 2.

Dans ce mode de réalisation des figures 5 et 6, les déplacements des objets 4i et 4s s'effectuent selon des translations verticales respectives B et H opposées.

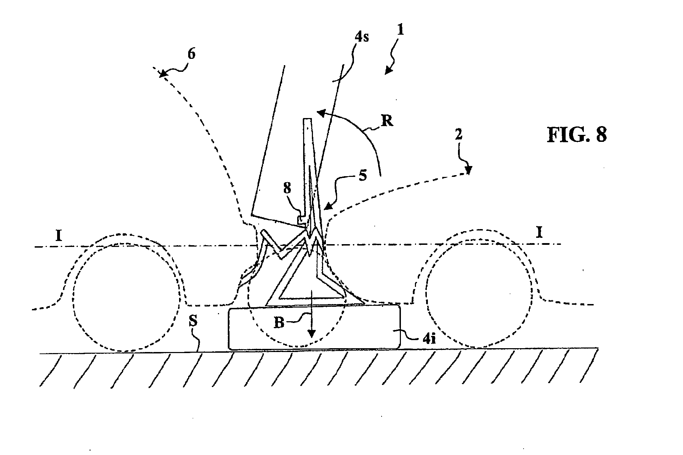

On considère maintenant les figures 7 et 8, qui illustrent une autre variante du dispositif de tenue d'objet 5 selon l'invention, appliquée à un mobile 1 de type remorque de véhicule.

On retrouve la même structure générale que dans le mode de réalisation des figures 5 et 6, à savoir un timon 7, pour l'attelage d'un mobile 1 à un véhicule tracteur 6, un dispositif de tenue d'objet 5 pour tenir un objet inférieur 4i et un objet supérieur 4s, une face supérieure 1e du mobile 1, et une face postérieure 1d au niveau d'un axe de collision I-I avec un mobile 2.

Dans ce mode de réalisation des figures 7 et 8, la tenue de l'objet inférieur 4i est identique à la tenue de l'objet inférieur 4i du mode de réalisation illustré sur les figures 5 et 6.

La différence réside dans la tenue de l'objet supérieur 4s, qui se trouve fixé non pas à une partie centrale du dispositif de tenue d'objet 5, mais à une partie extrême, par exemple la partie antérieure comme illustré par la zone de fixation 8.

Dans le cas d'une collision longitudinale de l'arrière du mobile 1, comme illustré sur la figure 8, l'objet inférieur 4i est déplacé selon une translation B vers le bas à l'écart de l'axe de collision I-I, tandis que l'objet supérieur 4s est déplacé vers le haut non seulement selon une translation, mais surtout selon une rotation R sur lui-même.

Dans les modes de réalisation qui ont été explicités, le dispositif de tenue d'objet 5 est formé de longerons 5i ou 5s aptes à se déformer sous l'effet de la compression due à la collision. On peut prévoir des longerons formant un cintre arrondi ou à pans coupés, dont la convexité est orientée vers le haut ou vers le bas. En alternative, on peut prévoir des longerons dont la résistance longitudinale est asymétrique en compression, résultant dans un fléchissement de flambage lors de la compression.

Dans l'exemple illustré sur les figures 5 et 6, on distingue un longeron supérieur 5s, sensiblement parallèle à l'axe de collision I-I, et dont la convexité est orientée vers le haut à l'état initial. Après collision, le tronçon intermédiaire 51s du longeron supérieur 5s est surélevé par l'effet de la rotation respective R2s ou R3s des tronçons extrêmes 52s et 53s. L'objet supérieur 4s, fixé au tronçon intermédiaire 51s, est ainsi écarté vers le haut selon la translation H vis-à-vis de l'axe de collision I-I.

De même, un longeron inférieur 5i est initialement sensiblement parallèle à l'axe de collision I-I, et présente une convexité orientée vers le bas. Après collision, le tronçon intermédiaire 51i du longeron inférieur 5i est surbaissé par l'effet de la rotation respective R2i ou R3i des tronçons extrêmes 52i et 53i. L'objet inférieur 4i, fixé au tronçon intermédiaire 51 i, est ainsi écarté vers le bas selon la translation B vis-à-vis de l'axe de collision I-I.

On peut prévoir que le dispositif de tenue d'objet 5 fait partie intégrante du châssis du mobile 1. Autrement dit, on conçoit alors le châssis de façon à comprendre des longerons 5s et 5i présentant les capacités de flambage appropriées.

En alternative, on peut prévoir que le dispositif de tenue d'objet 5 est un sous-ensemble rapporté sur le châssis du mobile 1.

Dans le cas d'un objet inférieur 4i que l'on va pousser vers le sol S, il est naturellement nécessaire de prévoir que l'appui de l'objet inférieur 4i sur le sol S ne puisse pas détériorer cet objet inférieur 4i. On doit ainsi prévoir une structure résistante aux chocs et aux frottements.

Par exemple, dans le cas d'un réservoir, l'enveloppe du réservoir devra être suffisamment résistante.

En alternative à des longerons 5s et 5i qui se cintrent, on peut prévoir d'autres moyens transformant un écrasement longitudinal en un déplacement vers le haut ou vers le bas, par exemple des leviers ou des coins.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de tenue d'objet (5) pour tenir au moins un objet (4, 4i, 4s) sur un mobile (1) susceptible d'être soumis à un effort d'écrasement selon au moins un axe de collision (I-I), dans lequel, en fonction de l'écrasement, le dispositif de tenue d'objet (5) déplace l'objet (4, 4i, 4s) à l'écart de l'axe de collision (I-I),
**caractérisé en ce que** :
- le dispositif (5) comprend au moins un longeron (5i, 5s), orienté selon une direction sensiblement parallèle à l'axe de collision (I-I), et apte à flamber sous l'effet de l'effort d'écrasement,
- l'objet (4, 4i, 4s) est fixé à un tronçon (51i, 51s, 8) du longeron (5i, 5s), ledit tronçon (51i, 51s, 8) s'écartant de l'axe de collision (I-I) lors du flambage du longeron (5i, 5s).

2. Dispositif de tenue d'objet (5) selon la revendication 1, **caractérisé en ce qu'il** est adapté pour tenir plusieurs objets (4i, 4s) sur le mobile (1) et pour déplacer lesdits objets (4i, 4s) à l'écart de l'axe de collision (I-I) selon des directions respectives distinctes (B, H).

3. Dispositif de tenue d'objet (5) selon l'une des revendications 1 ou 2, **caractérisé en ce qu'il** est adapté pour tenir plusieurs objets (4i, 4s) sur le mobile (1) et pour déplacer lesdits objets (4i, 4s) à l'écart de l'axe de collision (I-I) selon deux directions respectives opposées (B, H).

4. Dispositif de tenue d'objet (5) selon l'une quelconque des revendications 1 à 3, **caractérisé en ce qu'il** est adapté pour déplacer le ou les objets (4i, 4s) selon une translation (B, H).

5. Dispositif de tenue d'objet (5) selon l'une quelconque des revendications 1 à 4, **caractérisé en ce qu'il** est adapté pour déplacer le ou les objets (4i, 4s) selon une rotation (R).

6. Mobile (1) susceptible d'être soumis à un effort d'écrasement selon au moins un axe de collision (I-I), **caractérisé en ce qu'il** comprend un dispositif de tenue d'objet (5) selon l'une quelconque des revendications 1 à 5.

7. Mobile (1) selon la revendication 6, **caractérisé en ce que** le dispositif de tenue d'objet (5) est une partie du châssis du mobile (1).

8. Mobile (1) selon l'une des revendications 6 ou 7, **caractérisé en ce que** le dispositif de tenue d'objet (5) déplace l'objet vers le haut (H) ou vers le bas (B) du mobile (1).

9. Mobile (1) selon l'une quelconque des revendications 6 à 8, **caractérisé en ce que** l'objet (4, 4i, 4s) est un réservoir de fluide dangereux.

10. . Mobile (1) selon l'une quelconque des revendications 6 à 8, **caractérisé en ce que** l'objet (4, 4i, 4s) est peu compressible.

11. Mobile (1) selon l'une des revendications 6 ou 7, **caractérisé en ce que** :
- le dispositif de tenue d'objet (5) porte un réservoir de carburant (4i) et le déplace selon une translation vers le bas (B) en cas de compression selon l'axe de collision (I-I), et / ou
- le dispositif de tenue d'objet (5) porte un moteur thermique couplé à une génératrice d'électricité et les déplace vers le haut (H) en cas de compression selon l'axe de collision (I-I).

12. Mobile (1) selon l'une quelconque des revendications 6 à 11, **caractérisé en ce qu'il** constitue un véhicule automobile.

13. Mobile (1) selon l'une quelconque des revendications 6 à 11, **caractérisé en ce qu'il** constitue une remorque pour véhicule automobile.

## Patentansprüche

1. Objekttragvorrichtung (5) zum Halten wenigstens eines Gegenstandes (4, 4i, 4s) auf einem Mobil (1), das einer Quetschbeanspruchung in Richtung wenigstens einer Kollisionsachse (I-I) ausgesetzt sein kann, wobei in Abhängigkeit von der Quetschung die Objekttragvorrichtung (5) den Gegenstand (4, 4i, 4s) von der Kollisionsachse (I-I) wegbewegt, **dadurch gekennzeichnet, dass**:
- die Objekttragvorrichtung (5) wenigstens einen Längsholm (5i, 5s) hat, der sich im wesentlichen parallel zur Kollisionsachse (I-I) erstreckt und geeignet ist, unter der Wirkung der Quetschbeanspruchung einzuknicken,
- der Gegenstand (4, 4i, 4s) an einem Abschnitt (51i, 51s, 8) des Längsholms (5i, 5s) befestigt ist, wobei sich der Abschnitt (51i, 51s, 8) bei einer Quetschung des Längsholms (5i, 5s) von der Kollisionsachse (I-I) wegbewegt.

2. Objekttragvorrichtung (5) nach Anspruch 1, **dadurch gekennzeichnet, dass** diese geeignet ist, mehrere Gegenstände (4i, 4s) an dem Mobil (1) zu halten und diese von der Kollisionsachse (I-I) in unterschiedlichen Richtungen (B, H) weg zu bewegen.

3. Objekttragvorrichtung (5) nach einem der Ansprüche 1 oder 2, **dadurch gekennzeichnet, dass** diese geeignet ist, mehrere Gegenstände (4i, 4s) an dem Mobil (1) zu halten und diese von der Kollisionsachse (I-I) in zwei entgegengesetzten Richtungen (B, H) weg zu bewegen.

4. Objekttragvorrichtung (5) nach einem der Ansprüche 1 bis 3, **dadurch gekennzeichnet, dass** diese geeignet ist, den Gegenstand oder die Gegenstände (4i, 4s) im Sinne einer Translation (B, H) zu verschieben.

5. Objekttragvorrichtung (5) nach einem der Ansprüche 1 bis 4, **dadurch gekennzeichnet, dass** diese geeignet ist, den Gegenstand oder die Gegenstände (4i, 4s) im Sinne einer Rotation (R) zu bewegen.

6. Mobil (1), das einer Quetschbeanspruchung in Richtung wenigstens einer Kollisionsachse (I-I) ausgesetzt sein kann, **dadurch gekennzeichnet, dass** dieses eine Objekttragvorrichtung (5) nach einem der Ansprüche 1 bis 5 aufweist.

7. Mobil (1) nach Anspruch 6, **dadurch gekennzeichnet, dass** die Objekttragvorrichtung (5) Teil des Fahrgestells des Mobils (1) ist.

8. Mobil (1) nach Anspruch 6 oder 7, **dadurch gekennzeichnet, dass** die Objekttragvorrichtung (5) den Gegenstand bezüglich des Mobils (1) nach oben (H) oder nach unten (B) bewegt.

9. Mobil (1) nach einem der Ansprüche 6 bis 8, **dadurch gekennzeichnet, dass** der Gegenstand (4, 4i, 4s) ein Behälter für eine gefährliche Flüssigkeit ist.

10. Mobil (1) nach einem der Ansprüche 6 bis 8, **dadurch gekennzeichnet**, das der Gegenstand (4, 4i, 4s) wenig kompressibel ist.

11. Mobil (1) nach einem der Ansprüche 6 oder 7, **dadurch gekennzeichnet, dass**:
- die Objekttragvorrichtung (5) einen Kraftstoffbehälter (4i) trägt und diesen im Fall einer Kompression in der Kollisionsachse (I-I) in Richtung einer Translation nach unten (B) verschiebt und/oder
- die Objekttragvorrichtung (5) einen Verbrennungsmotor trägt, der mit einem elektrischen Stromerzeuger gekoppelt ist und diese im Fall einer Kompression in der Kollisionsachse (I-I) nach oben (H) verschiebt.

12. Mobil (1) nach einem der Ansprüche 6 bis 11, **dadurch gekennzeichnet, dass** dieses ein Automobil ist.

13. Mobil (1) nach einem der Ansprüche 6 bis 11, **dadurch gekennzeichnet, dass** dieses aus einem Anhänger für ein Automobil besteht.

## Claims

1. Object holding device (5) for holding at least one object (4, 4i, 4s) on a moving body (1) likely to be subjected to a crushing force along at least one collision axis (I-I), in which, depending on the crushing, the object holding device (5) displaces the object (4, 4i, 4s) away from the collision axis (I-I), **characterised in that**:
- the device (5) comprises at least one stringer (5i, 5s), oriented in a direction substantially parallel to the collision axis (I-I), and capable of buckling under the effect of the crushing force,
- the object (4, 4i, 4s) is fixed to a section (51i, 51s, 8) of the stringer (5i, 5s), said section (51i, 51s, 8) being moved away from the collision axis (I-I) upon the buckling of the stringer (5i, 5s).

2. Object holding device (5) according to claim 1, **characterised in that** it is suitable for holding several objects (4i, 4s) on the moving body (1) and for displacing said objects (4i, 4s) away from the collision axis (I-I) in distinct respective directions (B, H).

3. Object holding device (5) according to one of claims 1 or 2, **characterised in that** it is suitable for holding several objects (4i, 4s) on the moving body (1) and for displacing said objects (4i, 4s) away from the collision axis (I-I) in two opposite respective directions (B, H).

4. Object holding device (5) according to any one of claims 1 to 3, **characterised in that** it is suitable for displacing the object or objects (4i, 4s) via translation (B, H).

5. Object holding device (5) according to any one of claims 1 to 4, **characterised in that** it is suitable for displacing the object or objects (4i, 4s) via rotation (R).

6. Moving body (1) likely to be subjected to a crushing force along at least one collision axis (I-I), **characterised in that** it comprises an object holding device (5) according to any one of claims 1 to 5.

7. Moving body (1) according to claim 6, **characterised in that** the object holding device (5) is part of the frame of the moving body (1).

8. Moving body (1) according to one of claims 6 or 7, **characterised in that** the object holding device (5) displaces the object towards the top (H) or towards the bottom (B) of the moving body (1).

9. Moving body (1) according to any one of claims 6 to 8, **characterised in that** the object (4, 4i, 4s) is a tank of hazardous fluid.

10. Moving body (1) according to any one of claims 6 to 8, **characterised in that** the object (4, 4i, 4s) is not very compressible.

11. Moving body (1) according to one of claims 6 or 7, **characterised in that**:
- the object holding device (5) bears a tank of fuel (4i) and displaces it via translation downwards (B) in the event of compression along the collision axis (I-I), and/or
- the object holding device (5) bears a heat engine coupled to an electricity generator and displaces them upwards (H) in the event of compression along the collision axis (I-I).

12. Moving body (1) according to any one of claims 6 to 11, **characterised in that** it constitutes a motor vehicle.

13. Moving body (1) according to any one of claims 6 to 11, **characterised in that** it constitutes a trailer for a motor vehicle.
